# EUROPÄISCHE PATENTSCHRIFT

(11) **EP 3 410 090 B1**
(45) Veröffentlichungstag und Bekanntmachung des Hinweises auf die Patenterteilung: **30.10.2019**
(21) Anmeldenummer: 18173070.6
(22) Anmeldetag: 18.05.2018
(51) Int. Cl.: G01L 5/00, G01D 5/241

(54) **BEDIENVORRICHTUNG ZUM BEDIENEN VON ZUMINDEST EINEM GERÄT EINES KRAFTFAHRZEUGS, WOBEI DURCH EINE RÜCKSTELLEINRICHTUNG DAS BEDIENELEMENT IN EINE NULLSTELLUNG RÜCKFÜHRBAR IST, KRAFTFAHRZEUG SOWIE VERFAHREN**
OPERATING DEVICE FOR OPERATING AT LEAST ONE DEVICE OF A MOTOR VEHICLE, WHERE A RESET DEVICE IS USED TO RETURN THE CONTROL ELEMENT TO A NEUTRAL POSITION, MOTOR VEHICLE AND METHOD
DISPOSITIF DE COMMANDE PERMETTANT DE COMMANDER AU MOINS UN APPAREIL D'UN VÉHICULE AUTOMOBILE, L'APPAREIL DE COMMANDE, AU MOYEN D'UN DISPOSITIF DE RAPPEL, POUVANT ÊTRE RENVOYÉ À UNE POSITION NEUTRE, VÉHICULE AUTOMOBILE AINSI QUE PROCÉDÉ

(30) Priorität: 31.05.2017 DE 102017111920
(43) Veröffentlichungstag der Anmeldung: 05.12.2018
(73) Patentinhaber: Valeo Schalter und Sensoren GmbH, 74321 Bietigheim-Bissingen (DE)
(72) Erfinder: SCHMITT, Martin, 96476 Bad Rodach (DE); HENTSCHEL, Joachim, 96476 Bad Rodach (DE); MARTINEZ-GOTTSCHALK, Jose, 96476 Bad Rodach (DE); STERBA, Pavel, 10800 Prague (CZ)
(74) Vertreter: Pothmann, Karsten

(56) Entgegenhaltungen:
- WO-A1-89/09927
- WO-A2-2014/076295
- DE-A1-102014 117 991
- US-A- 4 719 538
- US-A1- 2011 083 950
- US-B1- 6 378 381

## Beschreibung

Die Erfindung betrifft eine Bedienvorrichtung zum Bedienen von zumindest einem Gerät eines Kraftfahrzeugs. Die Bedienvorrichtung weist ein Bedienelement und eine Messeinheit auf, die eine erste Elektrode und eine zweite Elektrode aufweist. Die zwei Elektroden sind abhängig von einer Betätigung des Bedienelements aus einer Nullstellung des Bedienelements relativ zueinander bewegbar. Abhängig von einem Abstand der ersten Elektrode und der zweiten Elektrode zueinander ist ein Wert eines physikalischen Parameters durch die Messeinheit erfassbar. In Abhängigkeit des Werts ist das Gerät bedienbar. Ferner betrifft die Erfindung ein Kraftfahrzeug sowie ein Verfahren zum Betreiben einer Bedienvorrichtung.

Aus dem Stand der Technik sind insbesondere Bedienvorrichtungen, bei welchen eine Bedienung eines Geräts mittels kapazitiver Kraftmesser beziehungsweise Kraftsensor erfolgen kann, bereits hinlänglich bekannt. Beispielsweise offenbart die DE 10 2014 117 991 A1 einen solchen kapazitiven Kraftsensor. Der kapazitive Kraftsensor weist einen Grundflächenkörper, einen flächigen, elastisch nachgebenden Membrankörper und zwei beabstandet zueinander angeordnete Abstandhalter zwischen dem Grundflächenkörper und dem Membrankörper auf. Der Membrankörper stützt sich über die Abstandhalter an dem Grundflächenkörper ab und überragt wenigstens einen der Abstandhalter und bildet dabei ein freies Ende aus. Zwischen dem Membrankörper und dem Grundflächenkörper ist im Bereich zwischen dem Abstandhalter ein Hohlraum ausgebildet. Bei einer Krafteinwirkung auf den Membrankörper im Bereich zwischen den Abstandhaltern wird ein Durchbiegen des Membrankörpers gestattet und wobei an dem freien Ende eine erste Elektrode und an dem Grundflächenkörper eine zweite Elektrode vorgesehen ist. Die erste und die zweite Elektrode definieren einen Messkondensator mit sich mit der Krafteinwirkung ändernde Messkapazität. Des Weiteren definieren die erste und die zweite Elektrode ferner Mittel zur elektrischen Kontaktierung. Bei diesem Kraftsensor wird keine haptische Rückmeldung für einen Bediener erzeugt, so dass der Bediener im Unklaren ist, ob ein Gerät bedient worden ist.

Aufgabe der folgenden Erfindung ist es, eine Bedienvorrichtung, ein Kraftfahrzeug sowie ein Verfahren zu schaffen, mittels welcher beziehungsweise welchem eine höhere elektrische Empfindlichkeit bereitgestellt werden kann, um Betätigungen eines Bedienelements genauer erfassen zu können und gleichzeitig für einen Bediener eine haptische Rückmeldung für die Bedienung der Bedienvorrichtung erzeugt werden kann.

Diese Aufgabe wird durch eine Bedienvorrichtung, durch ein Kraftfahrzeug sowie durch ein Verfahren gemäß den unabhängigen Ansprüchen gelöst.

Ein Aspekt der Erfindung betrifft eine Bedienvorrichtung zum Bedienen von zumindest einem Gerät eines Kraftfahrzeugs. Die Bedienvorrichtung weist ein Bedienelement und eine Messeinheit auf. Die Messeinheit weist eine erste Elektrode und eine zweite Elektrode auf, welche abhängig von einer Betätigung des Bedienelements aus einer Nullstellung des Bedienelements relativ zueinander bewegbar sind. Abhängig von einem Abstand der ersten Elektrode und der zweiten Elektrode zueinander ist ein Wert eines physikalischen Parameters durch die Messeinheit erfassbar. In Abhängigkeit des Werts ist das Gerät bedienbar.

Die Bedienvorrichtung weist ein Koppelelement auf, welches mit dem Bedienelement und mit der ersten Elektrode bewegungsgekoppelt ist. Die Bedienvorrichtung weist eine Rückstelleinrichtung auf, welche mit dem dazu separaten Bedienelement derart gekoppelt ist, dass das Bedienelement durch die Rückstelleinrichtung aus einer ausgelenkten Stellung in die Nullstellung rückführbar ist. In der Nullstellung sind die beiden Elektroden durch einen vorgespannten Zustand der Rückstelleinrichtung aneinander gedrückt und parallel zueinander ausgerichtet. Durch diese Ausgestaltungsform ist es ermöglicht, dass das Bedienelement automatisch wieder in die Nullstellung zurückgeführt ist, sobald das Bedienelement nicht mehr bedient ist. Dadurch kann, auch nach mehrfacher Betätigung des Bedienelements das Bedienelement zuverlässig in die Nullstellung zurückgeführt werden und dort sicher, durch die mechanische Vorspannung, gehalten werden. Durch die zuverlässige Rückführung in die Nullstellung kann eine höhere Empfindlichkeit beziehungsweise Sensibilität der Bedienvorrichtung erreicht werden. Darüber hinaus wird hiermit auch ein Toleranzausgleich des mechanischen Aufbaus erreicht. Dies hat den weiteren Vorteil, dass kein weiteres elektrisches Bauteil verwendet werden muss, wie es zum Beispiel bei Bedienvorrichtungen mit Dehnungsmessstreifen notwendig wäre. Auch sehr kleine Betätigungswege des Bedienelements können dadurch genauer und mit hoher Auflösung erkannt werden. Gleichzeitig ist über die Rückstelleinrichtung eine haptische Rückmeldung erzeugt, so dass der Bediener weiß, ob er das Gerät bedient hat oder nicht.

Bei der Betätigung handelt es sich insbesondere um eine positionelle Veränderung, insbesondere eine lineare Bewegung des Bedienelements. Durch die Betätigung abhängig von einem Abstand der zwei Elektroden zueinander ist der erste physikalische Parameter erfassbar. Insbesondere ist dann abhängig von dem physikalischen Parameter eine Betriebsfunktion des Geräts bedienbar.

Die Bedienvorrichtung weist insbesondere eine Auswerteeinheit zum Auswerten des Werts auf und abhängig von dem Ergebnis des Auswertens des Werts ist eine Betriebsfunktion des Geräts bedienbar. Mittels dieser Ausgestaltungsform kann somit die elektrische Empfindlichkeit der Betätigungsdetektion des Bedienelements erhöht werden, da die Auswerteeinheit abhängig von dem Wert die Betriebsfunktion des Geräts bedienen kann. Insbesondere dadurch, dass die Rückführung in die Nullstellung gewährleistet ist, führt dies zu einer genaueren Auflösung der Stellungen durch die Auswerteeinheit der Bedienvorrichtung.

Gemäß einer vorteilhaften Ausgestaltungsform kann die zweite Elektrode auf einer Leiterplatte, insbesondere parallel zur Leiterplatte, der Bedienvorrichtung ortsfest angeordnet sein. Dadurch kann realisiert werden, dass eine Wertänderung des physikalischen Parameters messbar ist und keine Lageveränderung der zweiten Elektrode auftritt. Die zweite Elektrode ist ortsfest und die erste Elektrode, insbesondere bei Betätigung, bewegt sich von der zweiten Elektrode weg, oder mit anderen Worten findet eine Abstandsvergrößerung zwischen den beiden Elektroden statt. Dies hat den Vorteil, dass bauteilreduziert die Bedienvorrichtung ausgebildet sein kann, da keine Mechanik notwendig ist, um die zweite Elektrode beweglich anzuordnen.

Es hat sich weiterhin als vorteilhaft erwiesen, wenn das Koppelelement sich durch ein Loch in der Leiterplatte erstreckt und mit der ersten Elektrode fest verbunden ist und mit einem ersten Koppelelementende mit dem Bedienelement bewegungsgekoppelt ist.

Insbesondere ist das Koppelelement stiftartig ausgebildet. Dadurch ist das Koppelelement materialsparend ausgebildet, sodass Gewicht eingespart werden kann. Des Weiteren ist ein Loch in der Leiterplatte ausreichend, um die Kraft bei Betätigung auf die erste Elektrode zu übertragen. Dadurch kann die Leiterplatte einfach hergestellt werden und die Leiterplatte bietet Bauraum für andere Einheiten, da lediglich ein Loch als Durchführung benötigt wird. Darüber hinaus sind sehr kurze Verbindungswege zwischen den Komponenten erreicht, wodurch ein kompakterer Aufbau begünstigt ist.

Insbesondere ist das Koppelelement mit einer Unterseite des Bedienelements mechanisch gekoppelt. Somit kann auch hier die Krafteinwirkung auf das Bedienelement direkt auf das Koppelelement weitergegeben werden, welches wiederum das Betätigen an die erste Elektrode überträgt, sodass abhängig von dem Wert der Abstandsänderung das Gerät einstellbar und/oder auswählbar ist.

Ebenfalls vorteilhaft ist, wenn die zweite Elektrode in die Leiterplatte integriert ist. Durch die Integration der zweiten Elektrode in die Leiterplatte kann die Bedienvorrichtung bauraumsparend ausgebildet sein, da die zweite Elektrode keinen extra Bauraum innerhalb der Bedienvorrichtung benötigt. Insbesondere kann dadurch weiterhin vorgesehen sein, dass bereits bei Herstellung der Leiterplatte die zweite Elektrode mitintegriert ist, sodass beispielsweise mittels einer Oberflächenmontagetechnologie (Surface Mounted Technology - SMT) der Montageaufwand der Bedienvorrichtung verringert ist.

Bevorzugt kann die Leiterplatte eine Schirmelektrode aufweisen. Bei der Schirmelektrode kann es sich insbesondere um eine Guard-Elektrode handeln. Mittels dieser Ausgestaltungsform können auch kleine Veränderungen besser detektiert werden. Die zweite Elektrode ist dabei häufig mit der Schirmelektrode "umgeben", die den inhomogenen Randbereich des elektrischen Felds von der zweiten Elektrode abschirmt. Dadurch ergibt sich zwischen der zweiten und der ersten Elektrode ein annähernd paralleles elektrisches Feld mit der bekannten Charakteristik eines idealen Plattenkondensators. Insbesondere können störende elektromagnetische Felder von weiteren Bauteilen der Leiterplatte von der Messeinheit, insbesondere von der zweiten Elektrode, abgeschirmt werden. Mittels der Schirmelektrode können somit Messfehler verhindert werden, sodass auch diese Anordnung zur Erhöhung der elektrischen Empfindlichkeit beiträgt.

Ebenfalls vorteilhaft ist, wenn die zweite Elektrode auf einer ersten Seite der Leiterplatte angeordnet ist, welche dem Bedienelement abgewandt ist. Dies hat den Vorteil, dass bei einer Betätigung des Bedienelements das Bedienelement die zweite Elektrode nicht berühren kann, sodass eine Beschädigung der zweiten Elektrode aufgrund der Bedienung des Bedienelements nicht gegeben ist. Dadurch kann eine Beschädigung der zweiten Elektrode verringert werden. Des Weiteren ist dadurch auf der Seite der Leiterplatte, die dem Bedienelement zugewandt ist, Bauraum geschaffen für weitere elektronischen Komponenten, welche insbesondere auf dieser angeordnet sein müssen, wie beispielsweise eine Beleuchtungseinrichtung für das Bedienelement.

Es hat sich weiterhin als vorteilhaft erwiesen, wenn die Rückstelleinrichtung an einer dem Bedienelement zugewandten Seite der Leiterplatte anliegt. Dadurch kann realisiert werden, dass die Rückstelleinrichtung das Bedienelement wieder in die Nullstellung zurückführt. Insbesondere kann dadurch verhindert werden, dass bei der Bewegung der Rückstelleinrichtung bei Betätigung des Bedienelements insbesondere die zweite Elektrode beschädigt wird. Des Weiteren kann dadurch zuverlässig eine haptische Rückmeldung für einen Bediener des Bedienelements erzeugt werden, sodass der Bediener weiß, wann eine Betätigung stattgefunden hat.

Ebenfalls vorteilhaft ist, wenn die Rückstelleinrichtung an einem topfförmigen Träger des Bedienelements angeordnet ist. Insbesondere durch die Ausgestaltungsform des topfförmigen Trägers kann die Rückstelleinrichtung eine Auflagefläche mit dem Bedienelement aufweisen, sodass eine zuverlässige Rückstellung nach Bedienung des Bedienelements realisiert werden kann.

Es hat sich weiterhin als vorteilhaft erwiesen, wenn zumindest eine der beiden Elektroden auf einer der anderen Elektrode zugewandten Oberseite eine Isolierschicht aufweist. Insbesondere kann dadurch verhindert werden, dass in der Nullstellung der Bedienvorrichtung beziehungsweise des Bedienelements die beiden Elektroden sich direkt berühren, und so einen elektrischen Kontakt aufbauen. Insbesondere kann dadurch bei einer Betätigung des Bedienelements eine spezifische Wertänderung erfasst werden. Ebenfalls möglich ist, dass, sollte beispielsweise die zweite Elektrode in der Leiterplatte integriert sein, die Isolierschicht durch das nichtleitende Material der Leiterplatte gebildet ist. Insbesondere kann dadurch mit wenig Montageaufwand und bauteilreduziert eine Isolation der beiden Elektroden, insbesondere in der Nullstellung, erreicht werden.

Gemäß einer weiteren vorteilhaften Ausgestaltungsform sind die erste Elektrode und die zweite Elektrode ringförmig und/oder zylinderförmig ausgebildet. Insbesondere durch die Ausgestaltungsform der zweiten Elektrode als Ringform und/oder Zylinderform kann dadurch das Loch für das Koppelelement sehr einfach in dem Ringloch der zweiten Elektrode ausgebildet sein. Insbesondere, wenn die erste Elektrode ebenfalls ringförmig ausgebildet ist, kann dann besonders zuverlässig und mit einer hohen Auflösung die Wertänderung erfasst werden.

Gemäß einer weiteren vorteilhaften Ausgestaltungsform kann das Bedienelement bereichsweise topfförmig ausgebildet sein und das dazu separate Koppelelement in den topfförmigen Bereich des Bedienelements eintauchend angeordnet sein und an einem dem Bedienelement abgewandten Ende des Koppelelements ein zum Eingriff mit einem Werkzeug ausgebildeter Verstellbereich, der zum Verstellen einer Relativposition zwischen dem Bedienelement und dem Koppelelement dient, ausgebildet ist. Insbesondere kann das Koppelelement in unterschiedlichen Relativpositionen zu dem Bedienelement im eingetauchten Zustand durch eine Einstelleinrichtung positionsfixierbar sein. Insbesondere kann dadurch ein individuelles Bedienerlebnis geschaffen werden, da durch Einstellen der Einstelleinrichtung beispielsweise die Kraft eingestellt werden kann, mittels welcher die Bedienvorrichtung bedient werden muss, um das Gerät bedienen zu können. Insbesondere kann durch die Einstelleinrichtung eine unterschiedliche Ausdehnung, insbesondere Längenausdehnung, der Rückstelleinrichtung realisiert werden, sodass dadurch die benötigte Bedienkraft eingestellt werden kann. Des Weiteren kann dadurch die Stärke der haptischen Rückmeldung eingestellt werden. Insbesondere wird das Koppelelement nach dem Einstellen der jeweiligen Relativposition fixiert, sodass eine Betätigung im jeweils nur fixierten Zustand erfolgt. Durch den Verstellbereich kann insbesondere mit einem Werkzeug beispielsweise einem Schlitzschraubenzieher, beispielsweise die aufzuwendende Kraft für die Bedienung des Bedienelements eingestellt werden. Dadurch kann individuell die Bedienvorrichtung an die jeweiligen Bedürfnisse angepasst werden.

Ein weiterer Vorteil besteht darin, dass die mit einer solch beschriebenen Vorrichtung eine Toleranzkompensation ermöglicht wird. Das ist insbesondere dann von Vorteil, wenn Bedienvorrichtungen bereitgestellt werden sollen, die nur einen geringen Bewegungsbereich von beispielsweise 0,2 mm aufweisen und hier die Kapazitätswerte stark schwanken können. Durch die einstellbare Elektrode kann der Startpunkt des Bewegungsbereichs genau und zuverlässig definiert werden.

Es kann weiter vorgesehen sein, dass eine Koppelstruktur zwischen dem Bedienelement und dem Koppelelement als Gewinde ausgebildet ist. Insbesondere kann dadurch das Koppelelement über die Koppelstruktur in das Bedienelement hineingeschraubt beziehungsweise herausgeschraubt werden und somit mechanisch stabil jedoch zerstörungsfrei lösbar angeordnet werden. Dadurch kann eine Einstellung der Bedienvorrichtung insbesondere bezüglich der Kraftaufwendung für die Bedienung des Bedienelements fein eingestellt werden. Insbesondere kann dadurch sehr einfach und bauteilarm eine individuelle und feinjustierbare Einstellung der Bedienvorrichtung durchgeführt werden.

Ebenfalls vorteilhaft ist, wenn die Rückstelleinrichtung eine Spiralfeder aufweist und/oder umlaufend um das Koppelelement angeordnet ist. Bei der Spiralfeder handelt es sich um eine einfache Rückstelleinrichtung, welche insbesondere zuverlässig, platzsparend und gewichtsreduziert innerhalb der Bedienvorrichtung angeordnet werden kann. Bevorzugt kann die Rückstelleinrichtung um das Koppelelement umlaufend angeordnet sein. Insbesondere kann dadurch die Rückstelleinrichtung platzsparend innerhalb der Bedienvorrichtung angeordnet werden. Des Weiteren kann dadurch eine homogene Bewegung des Bedienelements relativ zur Leiterplatte realisiert werden, sodass eine komfortable Betätigung des Bedienelements durch den Bediener durchgeführt werden kann. Sie kann ein anderes stiftartiges Element umlaufend umgreifen.

Es hat sich weiterhin als vorteilhaft erwiesen, wenn die Rückstelleinrichtung als elastisch verformbarer Massivkörper ausgebildet ist. Insbesondere kann der Massivkörper aus Silikon beziehungsweise einem Elastomer ausgebildet sein. Insbesondere kann dadurch eine langlebige, zuverlässige und gewichtsreduzierte Rückstelleinrichtung zur Verfügung gestellt werden. Insbesondere ist durch die Ausgestaltungsform des Massivkörpers aus Silikon beziehungsweise Elastomer die Rückstelleinrichtung vor der Beeinträchtigung durch Umwelteinflüsse geschützt, da diese Massivkörper besonders beständig gegenüber Umwelteinflüssen sind. Alternativ wären hier aber auch Blatt- oder Tellerfedern denkbar.

Gemäß einer weiteren vorteilhaften Ausgestaltungsform kann die erste Elektrode mit Massepotential gekoppelt sein. Dabei kann insbesondere auf der Leiterplatte das Massepotential bereitgestellt werden, sodass bauteilsparend eine Erdung der ersten Elektrode durchgeführt werden kann. Dadurch kann insbesondere eine kapazitive oder induktive Wechselwirkung zwischen den Elektroden realisiert werden. Insbesondere kann vorgesehen sein, dass die erste Elektrode mittels eines Federelements mit dem Massepotential verbunden ist. Insbesondere ist dann auch das Koppelelement metallisch, sodass auch das Koppelelement über das Federelement geerdet ist.

Ebenfalls vorteilhaft ist, wenn das Bedienelement um eine Drehachse der Bedienvorrichtung schwenkbar gelagert ist, und die erste Elektrode und die zweite Elektrode durch ein Schwenken des Bedienelements um die Drehachse relativ zueinander bewegbar sind. Insbesondere kann dadurch ein einfaches Wipptastenprinzip mit Krafterkennung realisiert werden. Dadurch kann neben einem reinen Druckbedienelement auch ein Wippbedienelement bereitgestellt werden, welches nach Betätigung des Bedienelements wieder in die Nullstellung rückführbar ist. Dadurch ist ein erweiterter funktioneller Einsatz der Bedienvorrichtung realisiert.

Gemäß einer vorteilhaften Ausgestaltungsform kann eine Induktivität oder eine Kapazität als physikalischer Parameter erfassbar sein. Ein physikalischer Parameter kann insbesondere ein Kapazitätswert oder ein Induktivitätswert sein, welche insbesondere auch eine Kapazitätsänderung oder eine Induktivitätsänderung sein können, welche durch eine Abstandsänderung und/oder durch einen Abstand der beiden Elektroden zueinander entstehen. Auf Basis dieser Kapazitätsänderung oder Induktivitätsänderung der Messeinheit kann dann der Wert ausgewertet werden und die Betriebsfunktion des Geräts bedient werden. Ebenfalls möglich ist, dass der jeweilige Kapazitätswert oder Induktivitätswert nach einer Betätigung in der Endposition der zueinander bewegten Elektroden bestimmbar ist und somit jeweils ein absoluter Kapazitätswert oder Induktivitätswert der Messeinheit auswertbar ist.

Die Erfindung betrifft ebenfalls ein Kraftfahrzeug mit einer Bedienvorrichtung gemäß der Erfindung oder einer vorteilhaften Ausführungsform davon. Insbesondere kann das Kraftfahrzeug als Personenkraftfahrzeug ausgebildet sein.

Ferner betrifft die Erfindung ein Verfahren zum Betreiben einer Bedienvorrichtung zum Bedienen von zumindest einem Gerät eines Kraftfahrzeugs. Durch Betätigen eines Bedienelements der Bedienvorrichtung aus einer Nullstellung des Bedienelements wird eine Abstandsänderung erzeugt, welche abhängig von einer Betätigung des Bedienelements zwischen einer ersten Elektrode einer Messeinheit der Bedienvorrichtung und einer zweiten Elektrode der Messeinheit der Bedienvorrichtung erzeugt wird. Abhängig von der Abstandsänderung wird ein Wert eines physikalischen Parameters durch die Messeinheit erfasst und in Abhängigkeit des Werts das Gerät eingestellt und/oder ausgewählt. Die Bedienvorrichtung weist ein Koppelelement auf, welches mit dem Bedienelement und mit der ersten Elektrode beim Betätigen des Bedienelements bewegungsgekoppelt ist, und die Bedienvorrichtung weist ein Rückstelleinrichtung auf, welches mit dem Bedienelement derart gekoppelt ist, dass das Bedienelement durch die Rückstelleinrichtung aus einer ausgelenkten Stellung in die Nullstellung zurückgeführt wird. In der Nullstellung werden die beiden Elektroden durch einen vorgespannten Zustand der Rückstelleinrichtung aneinandergedrückt.

Vorteilhafte Ausgestaltungsformen der Bedienvorrichtung sind als vorteilhafte Ausgestaltungsformen des erfindungsgemäßen Kraftfahrzeugs beziehungsweise des erfindungsgemäßen Verfahrens anzusehen, wobei dazu gegenständliche Merkmale der Bedienvorrichtung die Durchführung der Verfahrensschritte ermöglichen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen und in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch aus separierten Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten Anspruchs aufweisen. Es sind darüber hinaus Ausführungen und Merkmalskombinationen, insbesondere durch die oben dargelegten Ausführungsformen, als offenbart anzusehen, die über den Rückbezügen der Ansprüche dargelegten Merkmalskombinationen hinausgehen oder abweichen.

Ausführungsbeispiele werden nachfolgend anhand von schematischen Zeichnungen erläutert.

Dabei zeigen:
- Fig. 1: ein Kraftfahrzeug gemäß einer Ausführungsform der Erfindung, welches eine Bedienvorrichtung aufweist;
- Fig. 2: eine schematische Querschnittansicht einer Ausführungsform einer Bedienvorrichtung;
- Fig. 3: eine weitere schematische Querschnittansicht einer Ausführungsform einer Bedienvorrichtung;
- Fig. 4: eine schematische Perspektivansicht einer Ausführungsform einer Bedienvorrichtung;
- Fig. 5: eine weitere schematische Perspektivansicht einer Ausführungsform einer Bedienvorrichtung;
- Fig. 6: eine weitere schematische Perspektivansicht einer Ausführungsform eines Bedienelements;
- Fig. 7: eine weitere schematische Querschnittansicht einer Ausführungsform einer Bedienvorrichtung;
- Fig. 8: eine weitere schematische Perspektivansicht einer Ausführungsform der Bedienvorrichtung;
- Fig. 9: eine weitere schematische Perspektivansicht einer Ausführungsform der Bedienvorrichtung;
- Fig. 10: eine weitere schematische Perspektivansicht einer Ausführungsform der Bedienvorrichtung;
- Fig. 11: eine weitere schematische Perspektivansicht einer Ausführungsform einer Bedienvorrichtung;
- Fig. 12: eine weitere schematische Querschnittsansicht einer Ausführungsform einer Bedienvorrichtung;
- Fig. 13: eine weitere schematische Querschnittsansicht einer Ausführungsform einer Bedienvorrichtung;
- Fig. 14: eine Detailansicht einer weiteren schematischen Querschnittsansicht einer Ausführungsform der Bedienvorrichtung gemäß Fig. 12; und
- Fig. 15: eine Detailansicht einer weiteren schematischen Querschnittansicht einer Ausführungsform der Bedienvorrichtung gemäß Fig. 13.

In den Figuren sind gleiche oder funktionsgleiche Elemente mit den gleichen Bezugszeichen versehen.

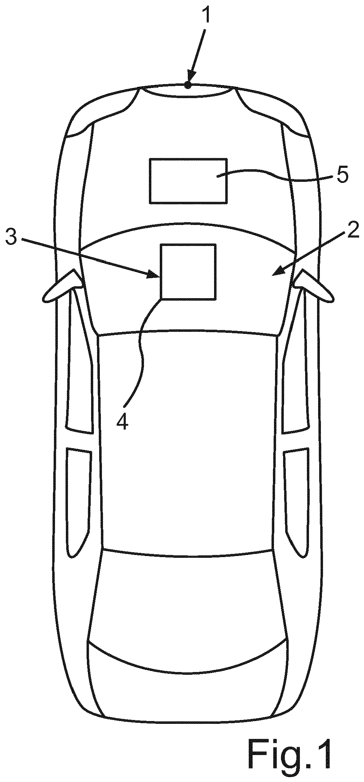

Fig. 1 zeigt ein Kraftahrzeug 1 gemäß einer Ausführungsform der Erfindung in einer Draufsicht. Das Kraftfahrzeug 1 ist vorliegend als Personenkraftwagen ausgebildet. Das Kraftfahrzeug 1 umfasst einen Innenraum 2, in welchem eine Bedienvorrichtung 3 angeordnet ist. Die Bedienvorrichtung 3, welche vorliegend schematisch dargestellt ist, umfasst zumindest ein Bedienelement 4, welches von einem Insassen des Kraftfahrzeugs 1 bedient werden kann. Die Bedienvorrichtung 3 kann derart im Innenraum 2 des Kraftfahrzeugs 1 angeordnet sein, dass das Bedienelement 4 dem Insassen des Kraftfahrzeugs 1 zugewandt ist.

Mit der Bedienvorrichtung 3 kann eine Bedienhandlung in Form der Betätigung des Bedienelements 4 erfasst werden. Durch eine Kraftaufbringung auf das Bedienelement 4 durch einen Nutzer beziehungsweise durch einen Bediener, beispielsweise einem Fahrer des Kraftfahrzeugs 1, kann ein entsprechendes Steuersignal ausgegeben werden.

Insbesondere kann vorgesehen sein, dass mittels der Bedienvorrichtung 3 zumindest ein Gerät 5 des Kraftfahrzeugs 1 bedient werden kann. Es kann auch vorgesehen sein, dass mit der Bedienvorrichtung 3 mehrere Funktionen des Geräts 5 bedient werden können beziehungsweise mehrere Geräte 5 mit der Bedienvorrichtung 3 bedient werden können.

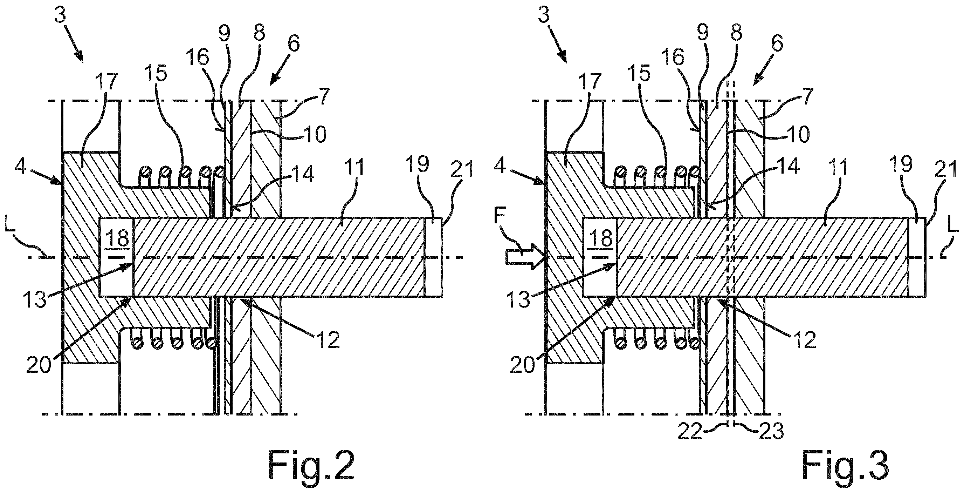

Fig. 2 zeigt eine schematische Querschnittansicht einer Ausführungsform einer Bedienvorrichtung 3. Die Bedienvorrichtung 3 weist insbesondere eine elektronische Messeinheit 6 auf. Die Messeinheit 6 weist eine erste Elektrode 7 sowie eine zweite Elektrode 8 auf. Die erste Elektrode 7 sowie die zweite Elektrode 8 können insbesondere ringförmig und/oder zylinderförmig ausgebildet sein. Es ist ebenfalls möglich, dass die erste Elektrode 7 oder die zweite Elektrode 8 rechteckförmig ausgebildet sind. Insbesondere ist vorgesehen, dass die zweite Elektrode 8 auf einer Leiterplatte 9 der Bedienvorrichtung 3 ausgebildet ist. Insbesondere ist die zweite Elektrode 8 in der Leiterplatte 9 integriert. Insbesondere ist vorgesehen, dass zumindest eine der beiden Elektroden 7, 8 auf einer der anderen Elektrode 7, 8 zugewandten Oberseite eine Isolierschicht 10 aufweist. Mittels der Isolierschicht 10 sind die beiden Elektroden 7, 8 elektrisch voneinander getrennt. Die Elektroden 7, 8 liegen dann nur durch die Isolierschicht 10 voneinander elektrisch getrennt direkt aufeinander auf. Insbesondere ist die zweite Elektrode 8 ortsfest auf der Leiterplatte 9 angeordnet. Die zweite Elektrode 8 ist insbesondere auf einer ersten Seite 14 der Leiterplatte 9 angeordnet und insbesondere dem Bedienelement 4 damit abgewandt auf der Leiterplatte 9 angeordnet.

Insbesondere sind die erste Elektrode 7 und die zweite Elektrode 8 parallel zur Leiterplatte 9 orientiert, wobei insbesondere die erste Elektrode 7 in Richtung senkrecht zu der ersten Seite 14 zur zweiten Elektrode 8 bewegbar ist. Insbesondere sind somit die beiden Elektroden 7, 8 zueinander parallel orientiert.

Ferner weist die Bedienvorrichtung 3 ein insbesondere stabförmiges beziehungsweise stiftartiges Koppelelement 11 auf, welches sich insbesondere durch ein Loch 12 in der Leiterplatte 9 erstreckt und mit der ersten Elektrode 7 verbunden ist. Insbesondere ist das Koppelelement 11 mit der zweiten Elektrode 7 bewegungsgekoppelt. Insbesondere ist das Koppelelement 11 mit einem ersten Koppelelementende 13 mit dem Bedienelement 4 ebenfalls bewegungsgekoppelt.

Insbesondere sind somit die erste Elektrode 7 und das Bedienelement 4 über das Koppelelement 11 miteinander mechanisch gekoppelt. Insbesondere kann vorgesehen sein, dass das Koppelelement 11 als ein Koppelstift ausgebildet ist.

Insbesondere ist vorgesehen, dass das Bedienelement 4 und das Koppelelement 11 separate Bauteile sind, die mechanisch miteinander verbunden sind. Insbesondere Mittels einer Einstelleinrichtung 19 der Bedienvorrichtung 3 kann eine Relativposition zwischen dem Bedienelement 3 und dem Koppelelement 11 veränderbar sein. Insbesondere wird das Koppelelement 11 nach dem Einstellen der jeweiligen Relativposition fixiert, sodass eine Betätigung im jeweils nur fixierten Zustand erfolgt.

Ferner weist die Bedienvorrichtung 3 eine Rückstelleinrichtung 15 auf. Insbesondere ist vorgesehen, dass die Rückstelleinrichtung 15 an einer dem Bedienelement 4 zugewandten Seite 16 der Leiterplatte 9 abgestützt ist. Insbesondere ist weiter vorgesehen, dass die Rückstelleinrichtung 15 an einem topfförmigen Träger 17 des Bedienelements 4 angeordnet ist, wobei der Träger 17 mit dem Bedienelement 4 bewegungsgekoppelt ist.

Insbesondere ist vorgesehen, dass das Bedienelement 4 bereichsweise topfförmig ausgebildet ist und das dazu separate Koppelelement 11 in einem topfförmigen Bereich 18 des Bedienelements 4 eintauchend angeordnet ist. Insbesondere sind unterschiedliche Relativpositionen des Koppelelements zu dem Bedienelement 4 im eingetauchten Zustand durch die Einstelleinrichtung 19 positionsfixierbar. Insbesondere kann zwischen dem Bedienelement 4 und dem Koppelelement 11 eine Koppelstruktur 20 ausgebildet sein, welche insbesondere als Gewinde ausgebildet ist. Somit kann im Zusammenspiel mit der Einstelleinrichtung 19 und der Koppelstruktur 20 die Relativposition des Koppelelements 11 und der Bedienvorrichtung 4 verstellt, insbesondere fein und kontinuierlich verstellt, werden, und damit insbesondere auch eine Relativposition des Bedienelements 4 zur Leiterplatte 9 eingestellt werden. Insbesondere kann dann an einem dem Bedienelement 4 abgewandten Ende 21 des Koppelelements 11 ein zum Eingriff mit einem Werkzeug ausgebildeter Verstellbereich, mit anderen Worten die Einstelleinrichtung 19, zum Verstellen einer Relativposition zwischen dem Bedienelement 4 und dem Koppelelement 11 angeordnet sein.

Des Weiteren ist insbesondere vorgesehen, dass die Rückstelleinrichtung 15 um das Koppelelement 11 umlaufend angeordnet ist.

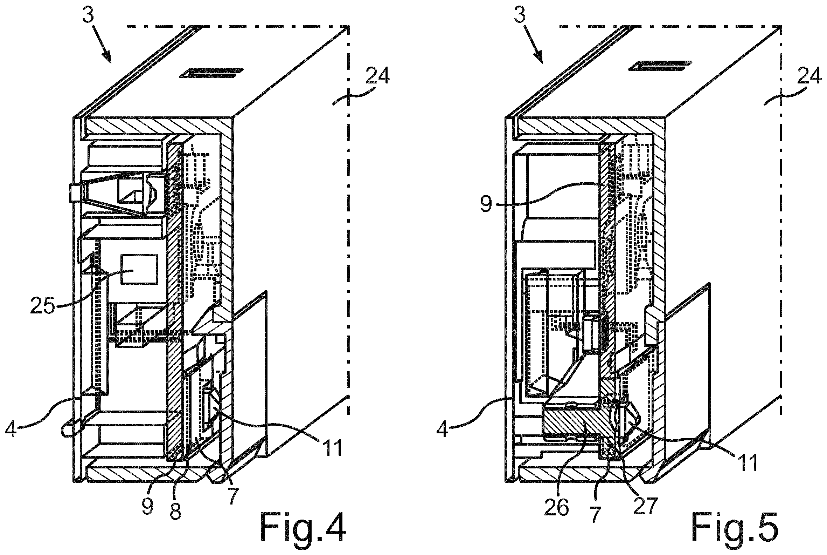

Fig. 3 zeigt eine weitere schematische Querschnittansicht einer Ausführungsform der Bedienvorrichtung 3. Die Bedienvorrichtung 3 befindet sich insbesondere in einem betätigten Zustand. Dies bedeutet, dass insbesondere ein Bediener der Bedienvorrichtung 3 das Bedienelement 4 betätigt hat, indem er eine Kraft F auf das Bedienelement 4 ausgeübt hat. Dadurch, dass das Bedienelement 4 mit dem Koppelelement 11 bewegungsgekoppelt ist, wurde dabei auch das Koppelelement 11 relativ zur Leiterplatte 9 bewegt. Die erste Elektrode 7 ist ebenfalls mit dem Koppelelement 11 bewegungsgekoppelt, sodass sich die erste Elektrode 7 ebenfalls relativ zur Leiterplatte 9 bewegt hat. Insbesondere ist die erste Elektrode 7 aus einer Nullstellung 22, die in Fig. 2 gezeigt ist in eine ausgelenkte Stellung 23 gerückt. Zwischen der ersten Elektrode 7 und der zweiten Elektrode 8 ist insbesondere ein Abstand entstanden. Mittels diesem Abstand A ist nun ein Wert eines physikalischen Parameters durch die Messeinheit 6, insbesondere durch eine Auswerteeinheit 25 (Fig. 4) der Messeinheit 6, erfassbar. Abhängig von dem Wert kann dann das Gerät 5 bedient werden. Insbesondere kann vorgesehen sein, dass abhängig von unterschiedlichen Werten bei unterschiedlichen Abständen A auch unterschiedliche Geräte 5 beziehungsweise unterschiedliche Betriebsarten des Geräts 5 bedienbar sind.

Ein physikalischer Parameter kann insbesondere ein Kapazitätswert oder ein Induktivitätswert sein, welche insbesondere auch eine Kapazitätsänderung oder eine Induktivitätsänderung sein können, welche durch den Abstand A der beiden Elektroden 7, 8 zueinander entstehen.

Insbesondere ist nun vorgesehen, dass, sollte der Bediener nicht mehr die Kraft F auf das Bedienelement 4 ausüben, sich mittels der Rückstelleinrichtung 15, welche insbesondere als Spiralfeder ausgebildet ist, die erste Elektrode 7 selbstständig in die Nullstellung 22 zurückbewegt. Mit anderen Worten wird nach Beendigung der Betätigung die erste Elektrode 7 wieder in die Nullstellung 22 automatisch zurückgebracht. Dadurch kann mit einer erhöhten Auflösung, da immer von der festen Nullstellung 22 ausgegangen werden kann, die Bedienvorrichtung 3 vorteilhafter bedient werden.

Fig. 4 zeigt eine schematische Perspektivansicht einer Ausführungsform einer Bedienvorrichtung 3. In dem folgenden Ausführungsbeispiel weist die Bedienvorrichtung 3 ein Gehäuse 24 auf. In dem Gehäuse 24 ist die Leiterplatte 9 mit der daraufliegenden beziehungsweise integrierten zweiten Elektrode 8 angeordnet. In Fig. 4 befindet sich die Bedienvorrichtung 3 in der Nullstellung 22, sodass die erste Elektrode 7 auf der zweiten Elektrode 8 direkt aufliegt. Insbesondere sind die beiden Elektroden 7, 8 mittels der Isolierschicht 10 voneinander isoliert. Insbesondere weist die Leiterplatte 9 das Loch 12 auf, sodass das Koppelelement 11 durch die Leiterplatte 9 hindurchgesteckt ist. Insbesondere ist das Koppelelement 11 mit der ersten Elektrode 7 bewegungsgekoppelt. Insbesondere kann dann bei einem Betätigen des Bedienelements 4, mit anderen Worten ein Drücken auf das Bedienelement 4, die erste Elektrode 7 mittels des bewegungsgekoppelten Koppelelements 11 von der zweiten Elektrode 8 wegbewegt werden. Mittels der Auswerteeinheit 25 kann dann der Wert der physikalischen Größe bestimmt werden, auf dessen Basis dann das Gerät 5 bedient wird. Im vorliegenden Beispiel sind die beiden Elektroden 7, 8 als flache rechteckige Platten ausgebildet.

Fig. 5 zeigt eine weitere Perspektivansicht einer Ausführungsform einer Bedienvorrichtung 3. In dem in Fig. 5 gezeigten Beispiel ist die erste Elektrode 7 zweiteilig ausgebildet. Ein erster Teil 26 ist insbesondere mit dem Bedienelement 4 bewegungsgekoppelt und kann insbesondere zur Erdung der ersten Elektrode 7 dienen. Des Weiteren dient der erste Teil 26 als Bewegungsführung der ersten Elektrode 7 mit dem Bedienelement 4. Der zweite Teil 27 der ersten Elektrode 7 dient insbesondere weiterhin zur Wechselwirkung mit der zweiten Elektrode 8 auf der Leiterplatte 9. Insbesondere ist mittels dieser Ausgestaltungsform eine sichere und homogene Bewegung bei Betätigung möglich, da ein Verkippen der ersten Elektrode 7 relativ zur zweiten Elektrode 8 aufgrund der Führung des ersten Teils 26 der ersten Elektrode 7 verhindert ist. Dadurch kann eine sichere Bedienung der Bedienvorrichtung 3 realisiert werden.

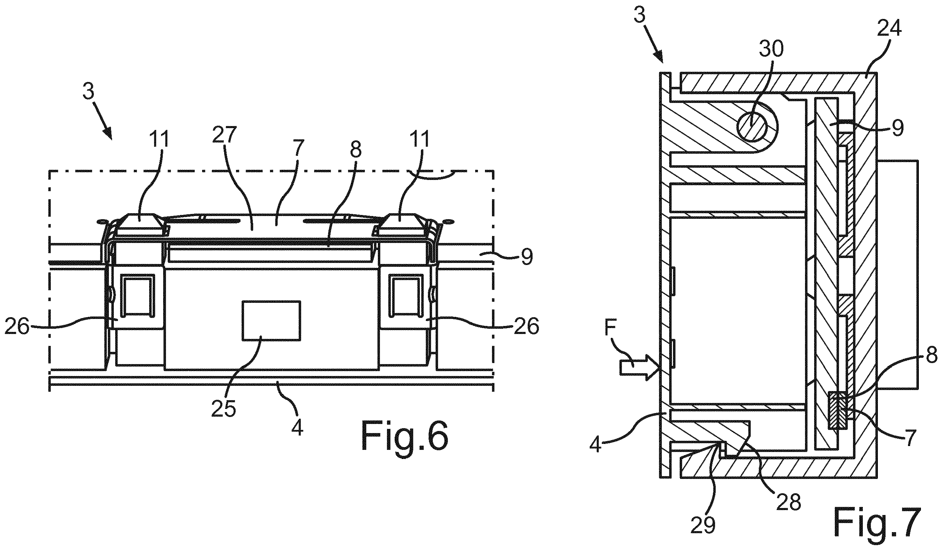

Fig. 6 zeigt eine weitere Perspektivansicht einer Ausführungsform der Bedienvorrichtung 3. Insbesondere zeigt Fig. 6 in vergrößerter Form die erste Elektrode 7, wie sie bereits aus Fig. 5 bekannt ist. Insbesondere weist die erste Elektrode 7 den ersten Teil 26 und den zweiten Teil 27 auf. Der zweite Teil 27 ist zum Wechselwirken mit der zweiten Elektrode 8 ausgebildet. Mittels des ersten Teils 26 kann insbesondere eine sichere Bewegungskopplung mit dem Koppelelement 11 und eine sichere Führung realisiert werden. Des Weiteren kann über den ersten Teil 26 beispielsweise auch ein Massepotential der ersten Elektrode 7 erreicht werden. Insbesondere kann mittels der Ausgestaltungsform aus Fig. 6 eine sichere und insbesondere parallele Verschiebung der ersten Elektrode 7 zur zweiten Elektrode 8 realisiert werden, sodass besonders zuverlässig der Wert der physikalischen Größe über die Auswerteeinheit 25 bestimmt werden kann und abhängig davon das Gerät 5 bedient werden kann.

Fig. 7 zeigt eine weitere Querschnittansicht einer Ausführungsform einer Bedienvorrichtung 3. In der vorliegenden Ausführungsform schwenkt das Bedienelement 4 bei der Betätigung mit der Kraft F um eine Drehachse 30 der Bedienvorrichtung 3. Beim Schwenken um die Drehachse 30 bewegt sich insbesondere die erste Elektrode 7 insbesondere nahezu linear von der zweiten Elektrode 8 weg, wodurch der Wert der physikalischen Größe erfasst werden kann. Insbesondere kann bei dieser Ausgestaltungsform vorgesehen sein, dass die Bedienvorrichtung 3 eine bedienelementexterne Rastnase 29 und das Bedienelement 4 einen Rasthaken 28 aufweist. Der Rasthaken 28 und die Rastnase 29 können insbesondere in der Nullstellung aneinander anschlagen, sodass eine Bewegung entgegen der Kraft F durch die Rastnase 29 und den Rasthaken 28 begrenzt ist. Diese Elemente stellen daher Bewegungsbegrenzungsanschläge dar. Somit kann insgesamt neben einem rein linear betätigbaren Bedienelement 4, wie in den Fig. 2 - 6 gezeigt, durch die Ausführungsform aus Fig. 7 auch ein Wipptastendrehprinzip durchgeführt werden. Somit ist der erfindungsgemäße Gedanke funktionell in einer weiteren Ausgestaltungsform umsetzbar.

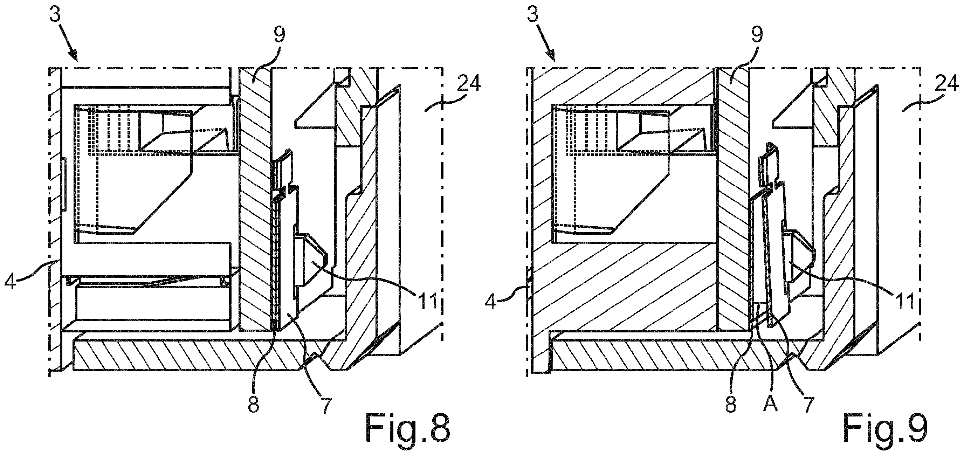

Fig. 8 zeigt die Bedienvorrichtung aus Fig. 7 in der Nullstellung 22. Die erste Elektrode 7 liegt auf der zweiten Elektrode 8 auf. Die erste Elektrode 7 und die zweite Elektrode 8 sind insbesondere als rechteckförmige Platten ausgebildet. Die erste Elektrode 7 ist mit dem Koppelelement 11 bewegungsgekoppelt.

Fig. 9 zeigt die Bedienvorrichtung 3 aus Fig. 7 beziehungsweise aus Fig. 8 in einer betätigten Position, also in der ausgelenkten Stellung 23. Insbesondere ist zwischen der ersten Elektrode 7 und der zweiten Elektrode 8 der Abstand A aufgetreten. Insbesondere zeigt Fig. 9, dass auch bei einer Schwenkbewegung eine nahezu lineare Abstandänderung zwischen den beiden Elektroden 7, 8 auftritt. Insbesondere kann dadurch auch bei dem Schwenken um die Drehachse 30 eine sehr hohe Auflösung bei dem Abstand A erfasst werden, sodass das Gerät 5 fein aufgelöst bedient werden kann.

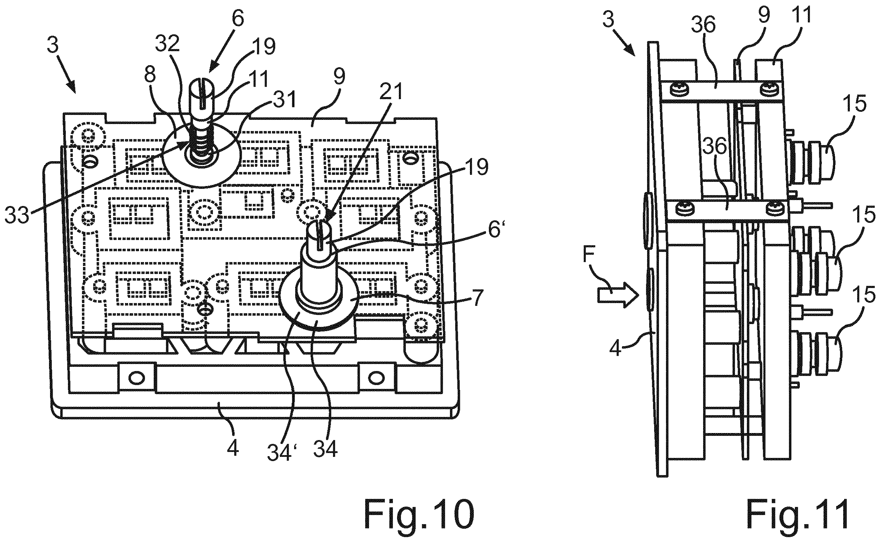

Fig. 10 zeigt eine weitere Perspektivansicht einer Ausführungsform der Bedienvorrichtung 3. Fig. 10 zeigt insbesondere, dass auf der Leiterplatte 9, welche hier auch als eine Trägerplatte 9 (Fig. 11) ausgebildet ist und somit ein gleiches Bauteil sind, ein Erdungskontakt 31 ausgebildet ist, welcher auch als Massekontakt bezeichnet werden kann. Der Erdungskontakt 31 ist mit einer Erdungsverbindung 32 verbunden. Insbesondere kann vorgesehen sein, dass die Erdungsverbindung 32 ein zum Erdungskontakt 31 separates Federelement 33 aufweist, welches das Koppelelement 11 umgreift und bei dem durch die Relativbewegungen zwischen den Elektroden 7, 8 auftretenden unterschiedlichen Abständen A jeweils sowohl mit dem Erdungskontakt 31 als auch mit der ersten Elektrode 7 kontaktiert. Insbesondere zeigt Fig. 10 die Messeinheit 6 und eine separate zweite Messeinheit 6'. Bei der Messeinheit 6 ist die erste Elektrode 7 nicht dargestellt, während bei der zweiten Messeinheit 6' die erste Elektrode 7 dargestellt ist, jedoch deshalb sowohl die zweite Elektrode 8 als auch der Erdungskontakt 31, die Erdungsverbindung 32 und das Federelement 33 nicht dargestellt sind.

Bei der Messeinheit 6 ist ersichtlich, dass die zweite Elektrode 8 ringartig umlaufend um den Erdungskontakt 31 und radial dazu beabstandet ausgebildet ist. Insbesondere ist die zweite Elektrode 8 beabstandet zum Erdungskontakt 31 und insbesondere sind die zweite Elektrode 8 und der Erdungskontakt 31 als konzentrische Ringe ausgebildet. Insbesondere ist dabei der Erdungskontakt 31 von der zweiten Elektrode 8 umgriffen.

Bei der zweiten Messeinheit 6' ist insbesondere ersichtlich, dass die erste Elektrode 7 topfförmig, insbesondere hülsenförmig, ausgebildet ist und an einem ersten Ende 34 eines rohrartigen Teils der ersten Elektrode 7 einen Elektrodenteller 34' aufweist.

Des Weiteren zeigt Fig. 10 insbesondere die Einstelleinrichtung 19 mit dem Verstellbereich am ersten Ende 21, welcher insbesondere mit einem

Schlitzschraubenzieher als Werkzeug beispielsweise verstellt werden kann, sodass das Bedienelement 3 in seiner Relativposition verändert werden kann.

Fig. 11 zeigt eine weitere Perspektivansicht einer Ausführungsform einer Bedienvorrichtung 3. Insbesondere sind als Rückstelleinrichtung 15 elastisch verformbare Massivkörper ausgebildet. Insbesondere können diese verformbaren Massivkörper aus Silikon beziehungsweise Elastomer ausgebildet sein. Insbesondere zeigt Fig. 11, dass ein zur Leiterplatte 9 separates Koppelelement 11 ausgebildet ist, welches vorliegend plattenartig ausgebildet und über Verbindungen 36 mit dem Bedienelement 4 bewegungsgekoppelt ist. Das Koppelelement 11 liegt vorliegend direkt auf den Massivblöcken auf ausgebildet ist. Insbesondere sind die Massivblöcke der Rückstelleinrichtung 15 mit dem Koppelelement verbunden. Bei einer Kraftbeaufschlagung mit der Kraft F des Bedienelements 4 werden die Massivblöcke verformt und dadurch kann nach einer Betätigung der Bedienvorrichtung 3 das Bedienelement 4 wieder in die Nullstellung 22 gebracht werden. Insbesondere bewegt sich 'das Koppelelement 11 bei der Betätigung des Bedienelements 4 mit dem Bedienelement 4. Die Leiterplatte 9 bleibt in der Ausgangsstellung zurück, sodass die erste Elektroden 7 gegenüber der Leiterplatte 9 und damit gegenüber der zweiten Elektrode 8 mitbewegt wird.

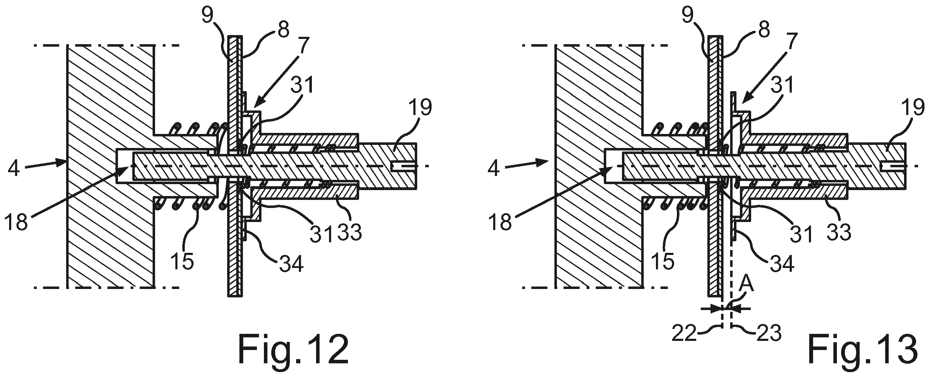

Fig. 12 zeigt eine schematische Querschnittansicht einer Ausführungsform der Bedienvorrichtung 3. Die Bedienvorrichtung 3 befindet sich vorliegend in der Nullstellung 22. Die beiden Elektroden 7, 8 liegen sind insbesondere parallel zueinander ausgerichtet. Mittels der Rückstelleinrichtung 15 werden die Elektroden 7,8 aneinander gedrückt. Die erste Elektrode 7 ist mittels des Federelements 33 und der Erdungsverbindung 32 mit dem Erdungskontakt 31 elektrisch gekoppelt. Der Erdungskontakt 31 ist insbesondere von der zweiten Elektrode 8 isoliert.

Fig. 13 zeigt eine schematische Querschnittansicht einer Ausführungsform der Bedienvorrichtung 3 gemäß Fig. 12. Vorliegend befindet sich die Bedienvorrichtung 3 in der ausgelenkten Stellung 23 und die beiden Elektroden 7, 8 weisen einen Abstand A zueinander auf. Mittels des Federelements 33 kann auch in der ausgelenkten Stellung 23 die erste Elektrode 7 mit dem Erdungskontakt 31 geerdet werden da das Federelement 33 längenveränderlich ist und somit auch bei den unterschiedlichen Relativpositionen der beiden Elektroden 7, 8 die elektrische Kopplung aufrecht erhält, so dass der physikalische Parameter erfassbar ist.

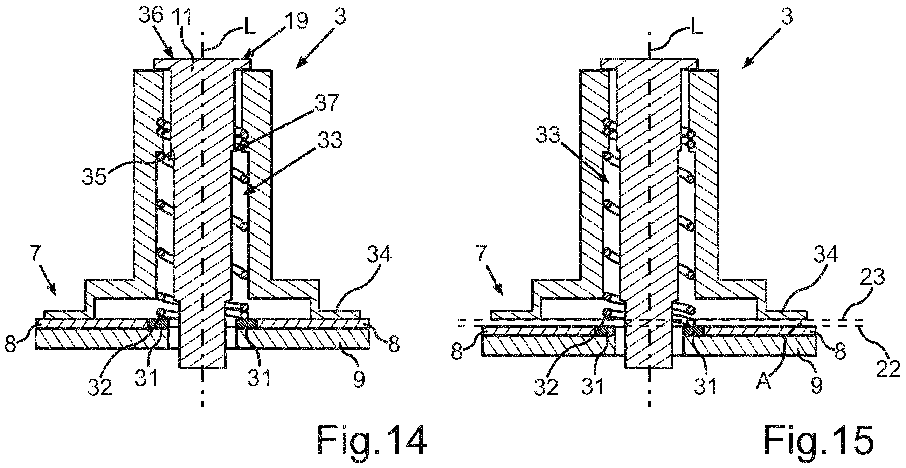

Fig. 14 zeigt eine Detailansicht einer weiteren schematischen Querschnittansicht einer Ausführungsform der Bedienvorrichtung 3 gemäß Fig. 12. Insbesondere zeigt Fig. 12 die Bedienvorrichtung 3 in der Nullstellung 22. Mit anderen Worten liegt die erste Elektrode 7 auf der zweiten Elektrode 8 auf. Insbesondere liegt die erste Elektrode 7 mit dem Elektrodenteller 34' auf der zweiten Elektrode 8 auf. Die erste Elektrode 7 ist wiederum über das Federelement 33 und der Erdungsverbindung 32 mit dem Erdungskontakt 31 elektrisch gekoppelt und damit geerdet. Insbesondere ist vorgesehen, dass zwischen der ersten Elektrode 7 und der zweiten Elektrode 8 die Isolierschicht 10 ausgebildet ist. Des Weiteren ist insbesondere vorgesehen, dass die zweite Elektrode 8 und der Erdungskontakt 31 elektrisch voneinander getrennt sind. Insbesondere ist vorgesehen, dass das Federelement 33 an einer Unterseite 35 des Koppelelementkopfs 36 abgestützt ist. Insbesondere kann das Federelement 33 an einem Podest 37 des Verstellbereichs des Koppelelements 11 anliegen. Insbesondere ist ebenfalls vorgesehen, dass das Federelement 33 über seine gesamte Erstreckung in Richtung einer Längsachse L des Federelements 33 betrachtet von der ersten Elektrode 7 umgeben ist.

Fig. 15 zeigt ferner eine weitere Detailansicht einer Ausführungsform der Bedienvorrichtung 3 aus Fig. 13 in der ausgelenkten Stellung 23. Die erste Elektrode 7 weist zur zweiten Elektrode 8 einen Abstand A auf, welcher aufgrund der Abstandsänderung durch Betätigen des Bedienelements 4 eingetreten ist. Durch die Ausgestaltungsform der Erdungsverbindung 32 als Federelement 33 kann auch in der ausgelenkten Stellung 23 die Erdung mit dem Erdungskontakt 31 realisiert werden, da sich insbesondere das Federelement 33 in seiner Länge verändern kann. Dadurch kann der Wert für den physikalischen Parameter bestimmt werden, wodurch das Gerät 5 bedient werden kann.

## Patentansprüche

1. Bedienvorrichtung (3) zum Bedienen von zumindest einem Gerät (5) eines Kraftfahrzeugs (1), mit einem Bedienelement (4) und mit einer Messeinheit (6, 6'), die eine erste Elektrode (7) und ein zweite Elektrode (8) aufweist, welche abhängig von einer Betätigung des Bedienelements (4) aus einer Nullstellung (22) des Bedienelements (4) relativ zueinander bewegbar sind, und abhängig von einem Abstand (A) der ersten Elektrode (7) und der zweiten Elektrode (8) zueinander ein Wert eines physikalischen Parameters durch die Messeinheit (6, 6') erfassbar ist und in Abhängigkeit des Werts das Gerät (5) bedienbar ist, wobei die Bedienvorrichtung (3) ein Koppelelement (11) aufweist, welches mit dem Bedienelement (4) und mit der ersten Elektrode (7) bewegungsgekoppelt ist, und die Bedienvorrichtung (3) eine Rückstelleinrichtung (15) aufweist, welche mit dem Bedienelement (4) derart gekoppelt ist, dass das Bedienelement (4) durch die Rückstelleinrichtung (15) aus einer ausgelenkten Stellung (23) in die Nullstellung (22) rückführbar ist, und in der Nullstellung (22) die beiden Elektroden (7, 8) durch einen vorgespannten Zustand der Rückstelleinrichtung (15) aneinander gedrückt und parallel zueinander ausgerichtet sind.

2. Bedienvorrichtung (3) nach Anspruch 1,
**dadurch gekennzeichnet, dass**
die zweite Elektrode (8) auf einer Leiterplatte (9), insbesondere parallel zur Leiterplatte, der Bedienvorrichtung (3) ortsfest angeordnet ist.

3. Bedienvorrichtung (3) nach Anspruch 2,
**dadurch gekennzeichnet, dass**
das Koppelelement (11) sich durch ein Loch (12) in der Leiterplatte (9) erstreckt und mit der ersten Elektrode (7) fest verbunden ist und mit einem ersten Koppelelementende (13) mit dem Bedienelement (4) bewegungsgekoppelt ist.

4. Bedienvorrichtung (3) nach Anspruch 2 oder 3,
**dadurch gekennzeichnet, dass**
die zweite Elektrode (8) in die Leiterplatte (9) integriert ist.

5. Bedienvorrichtung (3) nach einem der vorherigen Ansprüche 2 bis 4,
**dadurch gekennzeichnet, dass**
die zweite Elektrode (8) auf einer ersten Seite (14) der Leiterplatte (9) angeordnet ist, welche dem Bedienelement (4) abgewandt ist.

6. Bedienvorrichtung (3 nach einem der vorherigen Ansprüche 2 bis 5,
**dadurch gekennzeichnet, dass**
die Rückstelleinrichtung (15) an einer dem Bedienelement (3) zugewandten Seite (16) der Leiterplatte (9) anliegt.

7. Bedienvorrichtung (3 nach einem der vorherigen Ansprüche 2 bis 6,
**dadurch gekennzeichnet, dass**
die Rückstelleinrichtung (15) an einem topfförmigen Träger (17) des Bedienelements (4) angeordnet ist.

8. Bedienvorrichtung (3) nach einem der vorhergehenden Ansprüche,
**dadurch gekennzeichnet, dass**
zumindest eine der beiden Elektroden (7, 8) auf einer der anderen Elektrode (7, 8) zugewandten Oberseite eine Isolierschicht (10) aufweist.

9. Bedienvorrichtung (3) nach einem der vorhergehenden Ansprüche,
**dadurch gekennzeichnet, dass**
die erste Elektrode (7) und die zweite Elektrode (8) ringförmig und/oder zylinderförmig ausgebildet sind.

10. Bedienvorrichtung (3) nach einem der vorhergehenden Ansprüche,
**dadurch gekennzeichnet, dass**
das Bedienelement (4) bereichsweise topfförmig ausgebildet ist und das dazu separate Koppelement (11) in den topfförmigen Bereich (18) des Bedienelements (4) eintauchend angeordnet ist und an einem dem Bedienelement (4) abgewandten Ende (21) des Koppelements (11) ein zum Eingriff mit einem Werkzeug ausgebildeter Verstellbereich, der zum Verstellen einer Relativposition zwischen dem Bedienelement (4) und dem Koppelelement (11) dient, ausgebildet ist.

11. Bedienvorrichtung (3) nach Anspruch 10,
**dadurch gekennzeichnet, dass**
eine Koppelstruktur (20) zum Koppeln des Bedienelements (4) mit dem Koppelelement (11) als Gewinde ausgebildet ist.

12. Bedienvorrichtung (3) nach einem der vorhergehenden Ansprüche,
**dadurch gekennzeichnet, dass**
die Rückstelleinrichtung (15) eine Spiralfeder aufweist und/oder umlaufend um das Koppelelement (11) angeordnet ist.

13. Bedienvorrichtung (3) nach einem der Ansprüche 1 bis 12,
**dadurch gekennzeichnet, dass**
die Rückstelleinrichtung (15) als elastisch verformbarer Massivkörper ausgebildet ist.

14. Bedienvorrichtung (3) nach einem der vorhergehenden Ansprüche,
**dadurch gekennzeichnet, dass**
die erste Elektrode (7) mit Massepotential gekoppelt ist.

15. Bedienvorrichtung (3) nach einem der vorhergehenden Ansprüche,
**dadurch gekennzeichnet, dass**
das Bedienelement (4) um eine Drehachse (30) der Bedienvorrichtung (3) schwenkbar gelagert ist, und die erste Elektrode (7) und die zweite Elektrode (8) durch ein Schwenken des Bedienelements (4) um die Drehachse (30) relativ zueinander bewegbar sind.

16. Bedienvorrichtung (3) nach einem der vorhergehenden Ansprüche,
**dadurch gekennzeichnet, dass**
eine Induktivität oder eine Kapazität als physikalischer Parameter erfassbar ist.

17. Kraftfahrzeug (1) mit einer Bedienvorrichtung (3) nach einem der Ansprüche 1 bis 16.

18. Verfahren zum Betreiben einer Bedienvorrichtung (3) zum Bedienen von zumindest einem Gerät (5) eines Kraftfahrzeugs (1), bei welchem durch Betätigen eines Bedienelements (4) der Bedienvorrichtung (3) aus einer Nullstellung (22) des Bedienelements (4) eine Abstandsänderung (A), welche abhängig von einer Betätigung des Bedienelements (4) zwischen einer ersten Elektrode (7) einer Messeinheit (6, 6') der Bedienvorrichtung (3) und einer zweiten Elektrode (8) der Messeinheit (6, 6') erzeugt wird, und abhängig von der Abstandsänderung (A) ein Wert eines physikalischen Parameters durch die Messeinheit (6, 6') erfasst wird und in Abhängigkeit des Werts das Gerät (5) eingestellt und/oder ausgewählt wird, wobei die Bedienvorrichtung (3) ein Koppelelement (11) aufweist, welches mit dem Bedienelement (4) und mit der ersten Elektrode (7) beim Betätigen des Bedienelements (4) bewegungsgekoppelt ist, und die Bedienvorrichtung (3) eine Rückstelleinrichtung (15) aufweist, welche mit dem Bedienelement (4) derart gekoppelt ist, dass das Bedienelement (4) durch die Rückstelleinrichtung (15) aus einer ausgelenkten Stellung (23) in die Nullstellung (22) zurückgeführt wird, und in der Nullstellung (22) die beiden Elektroden (7, 8) durch einen vorgespannten Zustand der Rückstelleinrichtung (15) aneinander gedrückt und parallel zueinander ausgerichtet werden.

## Claims

1. Operator control device (3) for operating at least one device (5) of a motor vehicle (1), having an operator control element (4) and having a measuring unit (6, 6') which has a first electrode (7) and a second electrode (8) which can be moved relative to one another as a function of activation of the operator control element (4) out of a zero position (22) of the operator control element (4), and as a function of a distance (A) between the first electrode (7) and the second electrode (8) a value of a physical parameter can be acquired by the measuring unit (6, 6') and the device (5) can be operated as a function of the value,
wherein the operator control device (3) has a coupling element (11) which has a movement coupling to the operator control element (4) and to the first electrode (7), and the operator control device (3) has a resetting apparatus (15) which is coupled to the operator control element (4) in such a way that the operator control element (4) can be returned from a deflected position (23) into the zero position (22) by the resetting apparatus (15), and in the zero position (22) the two electrodes (7, 8) are pressed against one another and oriented in parallel with one another by a prestressed state of the resetting apparatus (15).

2. Operator control device (3) according to Claim 1,
**characterized in that**
the second electrode (8) is arranged in a positionally fixed fashion on a circuit board (9), in particular in parallel with the circuit board, of the operator control device (3).

3. Operator control device (3) according to Claim 2,
**characterized in that**
the coupling element (11) extends through a hole (12) in the circuit board (9) and is fixedly connected to the first electrode (7) and has a movement coupling by a first coupling element end (13) to the operator control element (4).

4. Operator control device (3) according to Claim 2 or 3,
**characterized in that**
the second electrode (8) is integrated into the circuit board (9).

5. Operator control device (3) according to one of the preceding Claims 2 to 4,
**characterized in that**
the second electrode (8) is arranged on a first side (14) of the circuit board (9) which faces away from the operator control element (4).

6. Operator control device (3) according to one of the preceding Claims 2 to 5,
**characterized in that**
the resetting apparatus (15) bears on a side (16), facing the operator control element (3), of the circuit board (9).

7. Operator control device (3) according to one of the preceding Claims 2 to 6,
**characterized in that**
the resetting apparatus (15) is arranged on a pot-shaped carrier (17) of the operator control element (4).

8. Operator control device (3) according to one of the preceding claims,
**characterized in that**
at least one of the two electrodes (7, 8) has an insulating layer (10) on an upper side facing the other electrode (7, 8).

9. Operator control device (3) according to one of the preceding claims,
**characterized in that**
the first electrode (7) and the second electrode (8) are embodied in an annular shape and/or cylindrical shape.

10. Operator control device (3) according to one of the preceding claims,
**characterized in that**
the operator control element (4) is embodied in certain areas in a pot shape, and the coupling element (11) which is separate therefrom is arranged so as to dip into the pot-shaped region (18) of the operator control element (4), and an adjustment region, which is designed for engagement with tool and serves to adjust a relative position between the operator control element (4) and the coupling element (11), is formed at an end (21), facing away from the operator control element (4), of the coupling element (11).

11. Operator control device (3) according to Claim 10,
**characterized in that**
a coupling structure (20) for coupling the operator control element (4) to the coupling element (11) is embodied as a thread.

12. Operator control device (3) according to one of the preceding claims,
**characterized in that**
the resetting apparatus (15) has a helical spring and/or is arranged running around the coupling element (11).

13. Operator control device (3) according to one of Claims 1 to 12,
**characterized in that**
the resetting apparatus (15) is embodied as an elastically deformable solid body.

14. Operator control device (3) according to one of the preceding claims,
**characterized in that**
the first electrode (7) is coupled to earth potential.

15. Operator control device (3) according to one of the preceding claims,
**characterized in that**
the operator control element (4) is mounted so as to be pivotable about a rotational axis (30) of the operator control device (3), and the first electrode (7) and the second electrode (8) can be moved relative to one another by pivoting the operator control element (4) about the rotational axis (30).

16. Operator control device (3) according to one of the preceding claims,
**characterized in that**
an inductance or a capacitance can be sensed as a physical parameter.

17. Motor vehicle (1) having an operator control device (3) according to one of Claims 1 to 16.

18. Method for operating an operator control device (3) for operating at least one device (5) of a motor vehicle (1), in which by activating an operator control element (4) of the operator control device (3) out of a zero position (22) of the operator control element (4) a change (A) in distance is sensed, which is generated as a function of activation of the operator control element (4) between a first electrode (7) of a measuring unit (6, 6') of the operator control device (3) and a second electrode (8) of the measuring unit (6, 6'), and as a function of the change (A) in distance a value of a physical parameter is sensed by the measuring unit (6, 6'), and the device (5) is set and/or selected as a function of the value, wherein the operator control device (3) has a coupling element (11) which has a movement coupling to the operator control element (4) and to the first electrode (7) when the operator control element (4) is activated, and the operator control device (3) has a resetting apparatus (15) which is coupled to the operator control element (4) in such a way that the operator control element (4) is returned from a deflected position (23) into the zero position (22) by the resetting apparatus (15), and in the zero position (22) the two electrodes (7, 8) are pressed against one another and oriented in parallel with one another by a prestressed state of the resetting apparatus (15).

## Revendications

1. Dispositif de commande (3) permettant de commander au moins un appareil (5) d'un véhicule automobile (1), avec un élément de commande (4) et avec une unité de mesure (6, 6'), qui présente une première électrode (7) et une seconde électrode (8), qui sont déplaçables l'une par rapport à l'autre en fonction d'un actionnement de l'élément de commande (4) à partir d'une position neutre (22) de l'élément de commande (4), et une valeur d'un paramètre physique peut être détectée par l'unité de mesure (6, 6') en fonction d'une distance (A) de la première électrode (7) et de la seconde électrode (8) l'une de l'autre et l'appareil (5) peut être commandé en fonction de la valeur, dans lequel le dispositif de commande (3) présente un élément de couplage (11), qui peut être couplé en mouvement avec l'élément de commande (4) et avec la première électrode (7), et le dispositif de commande (3) présente un dispositif de rappel (15), qui est couplé avec l'élément de commande (4), de telle manière que l'élément de commande (4) puisse être ramené d'une position déviée (23) à la position neutre (22) par le dispositif de rappel (15), et dans la position neutre (22) les deux électrodes (7, 8) sont pressées l'une sur l'autre par un état précontraint du dispositif de rappel (15) et sont orientées parallèlement l'une à l'autre.

2. Dispositif de commande (3) selon la revendication 1, **caractérisé en ce que** la seconde électrode (8) est disposée de façon fixe sur une plaquette de circuits imprimés (9), en particulier parallèlement à la plaquette de circuits imprimés, du dispositif de commande (3).

3. Dispositif de commande (3) selon la revendication 2 **caractérisé en ce que** l'élément de couplage (11) s'étend à travers un trou (12) dans la plaquette de circuits imprimés (9) et est assemblé de façon fixe à la première électrode (7) et est couplé en mouvement par une première extrémité d'élément de couplage (13) à l'élément de commande (4).

4. Dispositif de commande (3) selon une revendication 2 ou 3, **caractérisé en ce que** la seconde électrode (8) est intégrée dans la plaquette de circuits imprimés (9).

5. Dispositif de commande (3) selon l'une quelconque des revendications précédentes 2 à 4, **caractérisé en ce que** la seconde électrode (8) est disposée sur un premier côté (14) de la plaquette de circuits imprimés (9), qui est détourné de l'élément de commande (4).

6. Dispositif de commande (3) selon l'une quelconque des revendications précédentes 2 à 5, **caractérisé en ce que** le dispositif de rappel (15) s'applique sur un côté (16) de la plaquette de circuits imprimés (9) tourné vers l'élément de commande (3).

7. Dispositif de commande (3) selon l'une quelconque des revendications précédentes 2 à 6, **caractérisé en ce que** le dispositif de rappel (15) est agencé sur un support en forme de godet (17) de l'élément de commande (4).

8. Dispositif de commande (3) selon l'une quelconque des revendications précédentes, **caractérisé en ce qu'**au moins une des deux électrodes (7, 8) présente une couche isolante (10) sur un côté supérieur tourné vers l'autre électrode (7, 8) .

9. Dispositif de commande (3) selon l'une quelconque des revendications précédentes, **caractérisé en ce que** la première électrode (7) et la seconde électrode (8) sont réalisées sous forme annulaire et/ou sous forme cylindrique.

10. Dispositif de commande (3) selon l'une quelconque des revendications précédentes, **caractérisé en ce que** l'élément de commande (4) est réalisé localement en forme de godet et l'élément de couplage (11) séparé de celui-ci est disposé en plongée dans la région en forme de godet (18) de l'élément de commande (4) et une zone de réglage formée en vue d'un engagement avec un outil, qui sert pour le réglage d'une position relative entre l'élément de commande (4) et l'élément de couplage (11), est réalisée à une extrémité (21) de l'élément de couplage (11) détournée de l'élément de commande (4).

11. Dispositif de commande (3) selon la revendication 10, **caractérisé en ce qu'**une structure de couplage (20) pour le couplage de l'élément de commande (4) avec l'élément de couplage (11) est réalisée par un filetage.

12. Dispositif de commande (3) selon l'une quelconque des revendications précédentes, **caractérisé en ce que** le dispositif de rappel (15) présente un ressort hélicoïdal et/ou est disposé de façon enroulée autour de l'élément de couplage (11).

13. Dispositif de commande (3) selon l'une quelconque des revendications 1 à 12, **caractérisé en ce que** le dispositif de rappel (15) est formé par un corps massif déformable élastiquement.

14. Dispositif de commande (3) selon l'une quelconque des revendications précédentes, **caractérisé en ce que** la première électrode (7) est couplée au potentiel de la masse.

15. Dispositif de commande (3) selon l'une quelconque des revendications précédentes, **caractérisé en ce que** l'élément de commande (4) est monté de façon pivotante autour d'un axe de rotation (30) du dispositif de commande (3), et la première électrode (7) et la seconde électrode (8) sont déplaçables l'une par rapport à l'autre par un pivotement de l'élément de commande (4) autour de l'axe de rotation (30).

16. Dispositif de commande (3) selon l'une quelconque des revendications précédentes, **caractérisé en ce qu'**une inductance ou une capacitance peut être détectée comme paramètre physique.

17. Véhicule automobile (1) doté d'un dispositif de commande (3) selon l'une quelconque des revendications 1 à 16.

18. Procédé d'utilisation d'un dispositif de commande (3) permettant de commander au moins un appareil (5) d'un véhicule automobile (1), dans lequel on détecte, par actionnement d'un élément de commande (4) du dispositif de commande (3) à partir d'une position neutre (22) de l'élément de commande (3), un changement de distance (A), qui est produit en fonction d'un actionnement de l'élément de commande (4) entre une première électrode (7) d'une unité de mesure (6, 6') du dispositif de commande (3) et une seconde électrode (8) de l'unité de mesure (6, 6'), et en fonction du changement de distance (A) une valeur d'un paramètre physique par l'unité de mesure (6, 6') et on règle et/ou on sélectionne l'appareil (5) en fonction de la valeur, dans lequel le dispositif de commande (3) présente un élément de couplage (11), qui est couplé en mouvement avec l'élément de commande (4) et avec la première électrode (7) lors de l'actionnement de l'élément de commande (4), et le dispositif de commande (3) présente un dispositif de rappel (15), qui est couplé avec l'élément de commande (4), de telle manière que l'élément de commande (4) soit ramené d'une position déviée (23) à la position neutre (22) par le dispositif de rappel (15), et dans la position neutre (22) les deux électrodes (7, 8) sont pressées l'une sur l'autre par un état précontraint du dispositif de rappel (15) et sont orientées parallèlement l'une à l'autre.
